(19) **Europäisches Patentamt**

**European Patent Office**

**Office européen des brevets**

(11) **EP 1 593 093 B1**

(12) **EUROPEAN PATENT SPECIFICATION**

(45) Date of publication and mention
of the grant of the patent:
**16.08.2006 Bulletin 2006/33**

(51) Int Cl.:
***G06T 7/00*** *(2006.01)* ***G06T 17/10*** *(2006.01)*

(21) Application number: **04704671.9**

(22) Date of filing: **23.01.2004**

(86) International application number:
**PCT/IB2004/000185**

(87) International publication number:
**WO 2004/068412 (12.08.2004 Gazette 2004/33)**

(54) **METHOD FOR THE RECONSTRUCTION OF THREE-DIMENSIONAL OBJECTS**

VERFAHREN ZUR REKONSTRUKTION DREIDIMENSIONALER OBJEKTE

PROCEDE DE RECONSTRUCTION D'OBJETS 3D

(84) Designated Contracting States:
**AT BE BG CH CY CZ DE DK EE ES FI FR GB GR
HU IE IT LI LU MC NL PT RO SE SI SK TR**

(30) Priority: **31.01.2003 EP 03100199**

(43) Date of publication of application:
**09.11.2005 Bulletin 2005/45**

(73) Proprietors:
• **Philips Intellectual Property & Standards GmbH
20099 Hamburg (DE)**
Designated Contracting States:
**DE**
• **Koninklijke Philips Electronics N.V.
5621 BA Eindhoven (NL)**
Designated Contracting States:
**AT BE BG CH CY CZ DK EE ES FI FR GB GR HU
IE IT LI LU MC NL PT**

(72) Inventors:
• **WEESE, Jürgen,
c/o Philips Intellectual Property &
52066 Aachen (DE)**
• **RASCHE, Volker,
Philips Intellectual Property &
52066 Aachen (DE)**
• **YOUNG, Stewart,
Philips Intellectual Property &
52066 Aachen (DE)**
• **MOVASSAGHI, Babak,
Philips Intellectual Property &
52066 Aachen (DE)**

(74) Representative: **Volmer, Georg et al
Philips Intellectual Property & Standards GmbH,
Postfach 50 04 42
52088 Aachen (DE)**

(56) References cited:
• **KOPPE R ET AL: "3D RECONSTRUCTION OF
CEREBRAL VESSEL MALFORMATIONS BASED
ON ROTATIONAL ANGIOGRAPHY (RA)" CARS.
COMPUTER ASSISTED RADIOLOGY AND
SURGERY. PROCEEDINGS OF THE
INTERNATIONAL CONGRESS AND EXHIBITION,
PROCEEDINGS OF THE INTERNATIONAL
SYMPOSIUM ON COMPUTER ASSISTED
RADIOLOGY AND SURGERY, XX, XX, 1997,
pages 145-151, XP000938242**
• **LASSE RIIS OESTERGAARD ET AL:
"KNOWLEDGE-BASED EXTRACTION OF
CEREBRAL VASCULATURE FROM
ANATOMICAL MRI" PROCEEDINGS OF THE
SPIE, SPIE, BELLINGHAM, VA, US, vol. 4322, no.
PART 1-3, 19 February 2001 (2001-02-19), pages
170-183, XP008020264 ISSN: 0277-786X**
• **KEMKERS R ET AL: "3D-ROTATIONAL
ANGIOGRAPHY: FIRST CLINICAL APPLICATION
WITH USE OF ASTANDARD PHILIPS C-ARM
SYSTEM" CARS. COMPUTER ASSISTED
RADIOLOGY AND SURGERY. PROCEEDINGS OF
THE INTERNATIONAL CONGRESS AND
EXHIBITION, PROCEEDINGS OF THE
INTERNATIONAL SYMPOSIUM ON COMPUTER
ASSISTED RADIOLOGY AND SURGERY, XX, XX,
June 1998 (1998-06), pages 182-187,
XP000938243**

EP 1 593 093 B1

**(Cont. next page)**

- OH K-M ET AL: "A SEGMENTATION AND ABSTRACTION OF BLOOD VESSELS FROM VOLUME DATA FOR SURGICAL SIMULATION" INTERNATIONAL CONFERENCE ON ARTIFICIAL REALITY AND TELE-EXISTENCE, XX, XX, December 1999 (1999-12), pages 92-97, XP008020263
- WINDYGA P ET AL: "THREE-DIEMENSIONAL RECONSTRUCTION OF THE CORONARY ARTERIES USING A PRIORI KNOWLEDGE" MEDICAL AND BIOLOGICAL ENGINEERING AND COMPUTING, PETER PEREGRINUS LTD. STEVENAGE, GB, vol. 36, no. 2, 1 March 1998 (1998-03-01), pages 158-164, XP000739381 ISSN: 0140-0118
- HARIS K ET AL: "Coronary arterial tree extraction based on artery tracking and mathematical morphology" COMPUTERS IN CARDIOLOGY 1998 CLEVELAND, OH, USA 13-16 SEPT. 1998, NEW YORK, NY, USA,IEEE, US, 13 September 1998 (1998-09-13), pages 769-772, XP010314305 ISBN: 0-7803-5200-9

**Description**

The invention relates to a method for the computer-aided reconstruction of a three-dimensional anatomical object from diagnostic image data, having the method steps:

a) acquisition of a diagnostic image data set of an object,
b) setting of a seed point belonging to the object within a reconstruction volume,
c) location of an adjacent point, likewise belonging to the object, within the reconstruction volume in accordance with a propagation criterion, which is calculated by means of a mathematical analysis of local areas, assigned to the point concerned, of the image data set,
d) reconstruction of the three-dimensional structure of the object within the reconstruction volume by multiple repetition of method step c) and propagation along the adjacent points thus located.

In addition, the invention relates to a computer program and an imaging apparatus with computer means for performing this method.

In the field of angiography, three-dimensional medical imaging methods, such as for example three-dimensional rotational X-ray imaging (3D-RX) or magnetic resonance imaging (MRI), are growing in importance. The volume image data obtained with such methods contain interesting information for diagnosis of vessel diseases, such as for example stenoses or aneurysms. In such cases, visualization of the vessel structures is crucial in allowing a doctor treating the condition to recognize quickly and reliably potential danger sources (e.g. an impending infarction or thrombosis).

Computer-aided three-dimensional reconstruction of the vessel system of a patient from the image data acquired on the one hand allows the profile of the blood vessels to be visualized with high reproduction accuracy, anatomical structures not belonging to the vessel system concerned being hidden. On the other hand, the three-dimensional reconstruction of the vessel structures is a useful aid in planning interventions, such as for example left coronary catheter investigations (PTCA).

A three-dimensional reconstruction method for analyzing volume image data acquired by magnetic resonance angiography (MRA) is known for example from an article by Young et al (S. Young, V. Pekar and J. Weese, "Vessel Segmentation for Visualization of MRA with Blood Pool Contrast Agent", MICCAI 2001, 491-498, Utrecht, October 2001). The previously known method serves, inter alia, to separate the arterial and venous vessel systems from one another during visualization of the image data. According to the previously known method, first of all a diagnostic image data set is acquired in the form of a volume image of the vessel structures of interest, using a suitable contrast agent. Then, a user sets a seed point within a reconstruction volume, this seed point being identified by the user as belonging to a venous vessel. Automatic three-dimensional reconstruction of the selected vessel then takes place by means of a propagation method, which is based on a mathematical analysis of the respective local image areas. Starting from the seed point, points within the reconstruction volume are identified, in accordance with a propagation criterion supplied by the mathematical analysis, as belonging or not belonging to the vessel, whereby segmentation of the reconstruction volume takes place. Propagation continues until the entire structure has been reconstructed or until a set end point is reached. The mathematical analysis applied for calculation of the propagation criterion is of fundamental importance to the previously known method. In the stated article, a mathematical filter is proposed in this respect, which is based on evaluation of the second derivatives of the gray scale values within the local image areas. A proposed alternative involves adaptation of the local image data to a cylinder model, by means of which the mathematical analysis is rendered selective for image structures typical of blood vessels.

In rotational X-ray imaging, a plurality of two-dimensional projection images is recorded at different projection angles, for example by means of a C-arm X-ray apparatus. To make the blood vessels of the patient under investigation visible in the projection images, an X-ray absorbent contrast agent is injected into the patient. A problem with this investigation method is that the blood vessels typically have a complicated three-dimensional profile, which it is difficult for the doctor to detect solely on the basis of two-dimensional projection images. The missing three-dimensional information within a projection image must be added by the doctor by comparison with images recorded at other projection angles.

It is now possible to generate a volume image data set from the plurality of two-dimensional projection images recorded by means of 3D-RX using suitable modeling or back projection methods on a suitable computer. This volume image data set may then undergo an analysis of the type outlined above for the purpose of reconstruction of the three-dimensional vessel structures. This procedure, however, is disadvantageously associated with considerable computing power. A further disadvantage is that, in particular if the coronary vessels of the patient are to be investigated, generation of the projection images has to be ECG-controlled, so that the coronary arteries are recorded in all the images in the same phase of the heart beat cycle. Because of the need for ECG control, only a comparatively small number of images is then available for each phase of the heart beat cycle, which means that the volume images reconstructed therefrom reproduce the vessel structures only relatively inaccurately. A quantitative analysis according to the above-described reconstruction method does not then provide any usable results.

A 3D reconstruction method of cerebral vasculature based on a rotational angiography is known from Koppe et al. (R. Koppe, E. Klotz, H. Aerts, J. Op de Beek, R. Kemkers, "3D Reconstruction of Cerebral Vessel Malformations Based on Rotational Angiography", Computer Assisted Radiology and Surgery, CARS 1997, 145-151). From a set of 2D projection images a 3D image is generated and then segmented into vessels and background using a coincidence-algorithm. Each voxel of the reconstruction space is checked against all 2D projection images. If said voxel is a part of an object on all images than it is also a part of the 3D structure.

Taking this as basis, it is an object of the present invention to provide a method of segmenting a reconstruction volume which is in a position, starting from a comparatively small number of two-dimensional projection images, to determine the three-dimensional structure of the object reliably, precisely and using as little computing power as possible.

In the case of a method of the above-mentioned type, this object is achieved according to the invention in that, in method step a), a plurality of two-dimensional projection images is recorded from different projection directions, the propagation criterion being calculated in method step c) by subjecting the local image areas of the two-dimensional projection images in each case individually to mathematical analysis.

The basic concept of the invention is to perform the computer-aided segmentation of the reconstruction volume directly by means of a propagation method known per se, without any intermediate reconstruction of a three-dimensional volume image data set from the projection images. In the process, propagation in the reconstruction volume along the contours of the object to be reconstructed is controlled by combining the information obtained by means of the mathematical analysis applied to the individual two-dimensional projection images to yield a uniform propagation criterion.

To this end, it is possible, for example, to identify a point in method step c) as belonging to the object, provided that the mathematical analysis yields a result which agrees for a plurality of two-dimensional projection images. This procedure takes account of the fact that, on the basis of projection, the mathematical analysis of an individual, two-dimensional projection image may cause the point concerned to appear to belong to the object even when this is not actually the case. Only a comparison with the results obtained by mathematical analysis of the other projection images in relation to this point allows reliable segmentation.

The local image areas are appropriately determined in method step c) by projecting the point concerned within the reconstruction volume in accordance with the respective projection directions into the image planes of the two-dimensional projection images. In this way, the geometric conditions when the projection images are recorded are replicated, in order to be able to achieve assignment of the points of the reconstruction volume and the image points of the two-dimensional projection images.

By the mathematical analysis in method step c), a propagation coefficient ought appropriately to be calculated in each case as propagation criterion for each two-dimensional projection image, the value of which coefficient indicates whether the point concerned belongs to the object or not. Such a coefficient is particularly well suited to performance of the method according to the invention by means of a computer, since location of points belonging to the object to be reconstructed may be effected by simple numerical comparison. For example, the procedure may be performed in such a way that, in method step c), a point is identified as belonging to the object, provided that the propagation coefficient assumes a large value for a plurality of two-dimensional projection images.

A characteristic of blood vessels is their axial symmetry. They extend a long way in one direction and only a short way in the direction perpendicular thereto. This morphological characteristic may be used according to the invention to calculate the propagation coefficient. For three-dimensional reconstruction of vessel structures, it is accordingly sensible, during calculation of the propagation coefficient, to calculate the inherent values of the Hesse matrix of the gray scale values in the local image area of the respective two-dimensional projection image. By evaluating these inherent values, propagation then follows the image structures with - from a spatial point of view - the lowest possible gray scale curvature values, because the Hesse matrix provides information about the local second derivatives of the gray scale values. Suitable formulae for calculating the propagation coefficient on the basis of the inherent values of the Hesse matrix may be found, for example, in the above-cited article by Young et al. The propagation coefficient may be calculated from the two-dimensional projection images for example as follows:

$$R(\vec{x}) = \begin{cases} 0 & ,\lambda_2(\vec{x}) > 0, \\ \exp\left\{-\dfrac{r_\alpha^{\,2}}{2\alpha^2}\right\}\left(1 - \exp\left\{-\dfrac{S^2}{2c^2}\right\}\right) & ,\lambda_2(\vec{x}) \leq 0, \end{cases}$$

in which

$$r_\alpha = \frac{|\lambda_1|}{|\lambda_2|}, \; S = \sqrt{\sum_i \lambda_i^2}.$$

In this equation, $\alpha$ and $c$ are weighting factors and $\lambda_1(\vec{x})$ and $\lambda_2(\vec{x})$ are the inherent values of the local gray scale value Hesse matrix calculated at the point $\vec{x}$ within the respective two-dimensional projection image. More details about this may be found in the above-cited publication by Young et al.

When calculating the propagation coefficient for the respective two-dimensional projection image, adaptation to a cylinder model within the local image area may also be calculated. Such a cylinder model, which is also described in detail in the stated article by Young et al, likewise makes vessel structures distinguishable from other anatomical structures.

Reconstruction is appropriately stopped when a predeterminable end point is reached during propagation in method step d). Such an end point may either be predetermined interactively or determined automatically, for example on the basis of the size of the reconstruction volume.

An imaging apparatus, in particular a C-arm X-ray apparatus, for performing the method according to the invention constitutes the subject matter of claim 9, according to which a computer means of the imaging apparatus is provided with a program such that the two-dimensional projection images are recorded according to the above-described method. For angiographic investigations of the coronary arteries, the imaging apparatus appropriately comprises ECG control as claimed in claim 10, so as to be able to record the projection images synchronously with the heart beat.

A computer program as claimed in claim 11 is suitable for performing the method according to the invention, for example on an imaging apparatus equipped with a suitable computer means. The software required therefore may be made available to the users of corresponding imaging apparatus advantageously on a suitable data medium, such as a floppy disk or a CD-ROM, or by downloading from a data network (Internet).

The invention will be further described with reference to examples of embodiments shown in the drawings to which, however, the invention is not restricted. In the Figures:

Fig. 1 is a schematic representation of the method according to the invention for reconstructing a three-dimensional anatomical object;
Fig. 2 shows an imaging apparatus according to the invention.

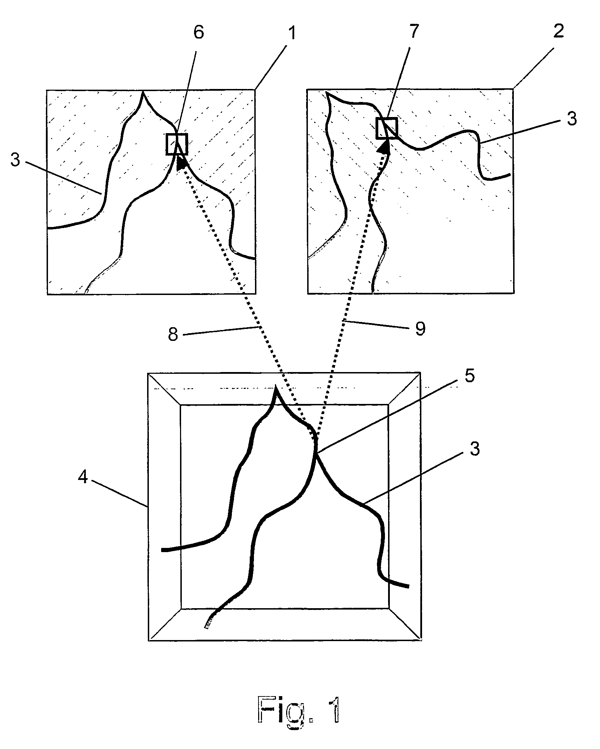

Fig. 1 shows a diagnostic image data set consisting of two two-dimensional projection images 1, 2, which image data set was acquired by means of X-ray fluoroscopy. Each of the projection images 1, 2, recorded at different projection angles, shows a branched blood vessel 3 of a patient. The projection images 1, 2 accordingly show the same blood vessel 3 from different perspectives. To acquire the image data set, a contrast agent was administered to the patient, such that the blood vessel 3 shows up dark in the projection images. To reconstruct the three-dimensional structure of the blood vessel 3 according to the invention, a seed point 5 is firstly set within a reconstruction volume 4. The contour of the blood vessel 3 is then reconstructed in the volume 4, by locating adjacent points in the volume 4 in each case belonging to the blood vessel 3 in accordance with a propagation criterion. To this end, local image areas 6 and 7 belonging to the respective point 5 within the two-dimensional projection images 1 and 2 respectively are in each case subjected individually to mathematical analysis. After location of a point adjacent to the seed point 5, the procedure is repeated for points in turn adjacent to this point, until the entire structure of the blood vessel 3 has been reconstructed within the volume 4. The point investigated in each case with each propagation step is identified as belonging to the blood vessel if the mathematical analysis of the local image areas 6 and 7 gives a positive result for both projection images 1 and 2 respectively. The local image areas 6 and 7 are determined by projecting the point 5, in accordance with the projection directions in which the two images 1 and 2 were recorded, into the image planes of these two images. This is indicated in Fig. 1 by arrows 8 and 9.

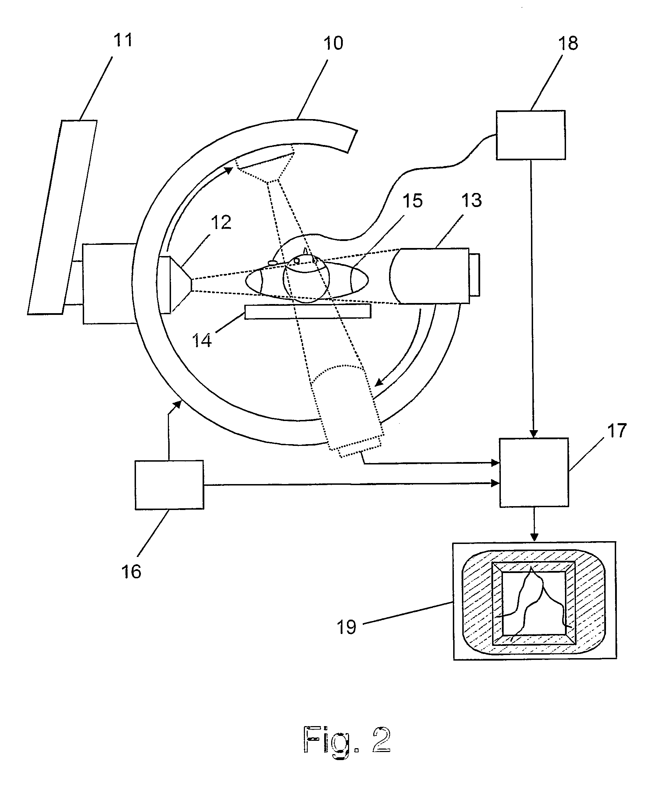

The imaging apparatus illustrated in Fig. 2 is a C-arm X-ray apparatus, which comprises a C-arm 10, which is suspended by means of a holder 11 from a ceiling (not described in any more detail). An X-ray source 12 and an X-ray image converter 13 are guided movably on the C-arm 10, such that a plurality of two-dimensional projection X-ray images of a patient 15 lying on a table 14 in the center of the C-arm 10 may be recorded at different projection angles. Synchronous movement of the X-ray source 12 and the X-ray image converter 13 is controlled by a control unit 16. During image recording, the X-ray source 12 and the X-ray image converter 13 travel synchronously around the patient 15. The image signals generated by the X-ray image converter 13 are transmitted to a controlled image processing unit 17. The heart beat of the patient 15 is monitored using an ECG apparatus 18. The ECG apparatus 18 transmits control signals to the image processing unit 17, such that the latter is in a position to store a plurality of two-dimensional projection images in each case in the same phase of the heart beat cycle, in order in this manner to perform an angiographic investigation of the coronary arteries. The image processing unit 17 comprises a program control, by means of which three-dimensional reconstruction of a blood vessel detected with the image data set thus acquired is performed, according to the above-described method. The reconstructed blood vessel may then be visualized in known manner on a monitor 19 connected to the image processing unit 17.

**Claims**

1. A method for the computer-aided reconstruction of a three-dimensional anatomical object (3) from diagnostic image data, having the method steps:

   a) acquisition of a diagnostic image data set of the object (3),
   b) setting of a seed point (5) belonging to the object (3) within a reconstruction volume (4),
   c) location of an adjacent point, likewise belonging to the object (3), within the reconstruction volume (4) in accordance with a propagation criterion, which is calculated by means of a mathematical analysis of local image areas (6, 7), assigned to the point (5) concerned, of the image data set,
   d) reconstruction of the three-dimensional structure of the object (3) within the reconstruction volume (4) by multiple repetition of method step c) and propagation along the adjacent points thus located,

   **characterized in that**, in method step a), a plurality of two-dimensional projection images (1, 2) is recorded from different projection directions, the propagation criterion being calculated in method step c) by subjecting the local image areas (6, 7) of the two-dimensional projection images (1, 2) in each case individually to the mathematical analysis.

2. A method as claimed in claim 1, **characterized in that**, in method step c), a point is identified as belonging to the object (3) if the mathematical analysis yields a result which agrees for a plurality of the two-dimensional projection images (1, 2).

3. A method as claimed in one of claims 1 or 2, **characterized in that**, in method step c), the local image areas (6, 7) are determined by projecting the respective point (5) within the reconstruction volume (4) in accordance with the respective projection directions into the image planes of the two-dimensional projection images (1, 2).

4. A method as claimed in one of claims 1 to 3, **characterized in that**, a propagation coefficient is calculated by the mathematical analysis in method step c), as a propagation criterion for each two-dimensional projection image (1, 2), the value of which coefficient indicates whether the point (5) concerned belongs to the object or not.

5. A method as claimed in claim 4, **characterized in that**, during calculation of the propagation coefficient, the inherent values are calculated of the Hesse matrix of the gray scale values in the local image area (6, 7) of the respective two-dimensional projection image (1,2)

6. A method as claimed in claim 4, **characterized in that**, when calculating the propagation coefficient for the respective two-dimensional projection image (1, 2), an adaptation to a cylinder model within the local image area (6, 7) is calculated.

7. A method as claimed in one of claims 4 to 6, **characterized in that** a point is identified in method step c) as belonging to the object (3) if the propagation coefficient assumes a large value for a plurality of two-dimensional projection images (1, 2).

8. A method as claimed in one of claims 1 to 7, **characterized in that** the reconstruction is stopped when a predeterminable end point is reached during propagation in method step d).

9. An imaging apparatus, in particular a C-arm X-ray apparatus, having means (10, 11, 12, 13, 16) for generating an image data set, which set comprises a plurality of two-dimensional projection images of a body part of a patient (15) recorded from different projection directions, and having computer means (17) for reconstructing a three-dimensional anatomical object from the image data set,
   **characterized in that** the computer means (17) comprise a program control which operates according to the method as claimed in one of claims 1 to 8 to reconstruct the object.

10. An imaging apparatus as claimed in claim 9, **characterized by** an ECG control (18), by means of which recording of the two-dimensional projection images can be controlled in accordance with the heart beat cycle of the patient (15).

11. A computer program for an imaging apparatus as claimed in claim 9 or claim 10, **characterized in that** the method as claimed in one of claims 1 to 8 is implemented by the computer program on the computer means of the imaging apparatus.

**Patentansprüche**

1. Verfahren zur computergestützten Rekonstruktion eines dreidimensionalen anatomischen Objektes (3) aus diagnostischen Bilddaten, mit den Verfahrensschritten:

   a) Aufnahme eines diagnostischen Bilddatensatzes des Objektes (3),
   b) Vorgabe eines dem Objekt (3) zugehörigen Startpunktes (5) innerhalb eines Rekonstruktionsvolumens (4),
   c) Auffinden eines ebenfalls dem Objekt (3) zugehörigen, benachbarten Punktes innerhalb des Rekonstruktionsvolumens (4) nach Maßgabe eines Propagationskriteriums, welches mittels einer mathematischen Analyse von dem betreffenden Punkt (5) zugeordneten, lokalen Bildbereichen (6, 7) des Bilddatensatzes berechnet wird,
   d) Rekonstruktion der dreidimensionalen Struktur des Objektes (3) innerhalb des Rekonstruktionsvolumens (4) durch mehrfache Wiederholung des Verfahrensschrittes c) und Propagation entlang der dabei aufgefundenen, benachbarten Punkte,

   **dadurch gekennzeichnet, dass** im Verfahrensschritt a) eine Mehrzahl von zweidimensionalen Projektionsbildern (1, 2) unter unterschiedlichen Projektionsrichtungen aufgenommen wird, wobei im Verfahrensschritt c) das Propagationskriterium berechnet wird, indem die lokalen Bildbereiche (6, 7) der zweidimensionalen Projektionsbilder (1, 2) jeweils einzeln der mathematischen Analyse unterzogen werden.

2. Verfahren nach Anspruch 1, **dadurch gekennzeichnet, dass** im Verfahrensschritt c) ein Punkt als dem Objekt (3) zugehörig identifiziert wird, wenn die mathematische Analyse für eine Mehrzahl der zweidimensionalen Projektionsbilder (1, 2) ein übereinstimmendes Ergebnis liefert.

3. Verfahren nach einem der Ansprüche 1 oder 2, **dadurch gekennzeichnet, dass** im Verfahrensschritt c) die lokalen Bildbereiche (6, 7) ermittelt werden, indem der betreffende Punkt (5) innerhalb des Rekonstruktionsvolumens (4) entsprechend den jeweiligen Projektionsrichtungen in die Bildebenen der zweidimensionalen Projektionsbilder (1, 2) projiziert wird.

4. Verfahren nach einem der Ansprüche 1 bis 3, **dadurch gekennzeichnet, dass** durch die mathematische Analyse im Verfahrensschritt c) als Propagationskriterium für jedes zweidimensionale Projektionsbild (1, 2) eine Propagations-Maßzahl berechnet wird, durch deren Betrag angegeben wird, ob der betreffende Punkt (5) zu dem Objekt zugehörit ist oder nicht.

5. Verfahren nach Anspruch 4, **dadurch gekennzeichnet, dass** bei der Berechnung der Propagations-Maßzahl die Eigenwerte der Hesse-Matrix der Grauwerte in dem lokalen Bildbereich (6, 7) der jeweiligen zweidimensionalen Projektionsbildes (1, 2) berechnet werden.

6. Verfahren nach Anspruch 4, **dadurch gekennzeichnet, dass** bei der Berechnung der Propagations-Maßzahl für das jeweilige zweidimensionale Projektionsbild (1, 2) eine Anpassung an ein Zylindermodell innerhalb des lokalen Bildbereiches (6, 7) berechnet wird.

7. Verfahren nach einem der Ansprüche 4 bis 6, **dadurch gekennzeichnet, dass** im Verfahrensschritt c) ein Punkt als dem Objekt (3) zugehörig identifiziert wird, wenn die Propagations-Maßzahl für eine Mehrzahl der zweidimensionalen Projektionsbilder (1, 2) einen großen Betrag annimmt.

8. Verfahren nach einem der Ansprüche 1 bis 7, **dadurch gekennzeichnet, dass** die Rekonstruktions abgebrochen wird, wenn bei der Propagation im Verfahrensschritt d) ein vorgebbarer Endpunkt erreicht wird.

9. Bildgebungsgerät, insbesondere C-Arm-Röntgengerät, mit Mitteln (10, 11, 12, 13, 16) zur Erzeugung eines Bilddatensatzes, welcher eine Mehrzahl von unter unterschiedlichen Projektionsrichtungen aufgenommenen, zweidimensionalen Projektionsbildern eines Körperteils eines Patienten (15) umfasst, und mit Computermitteln (17) zur Rekonstruktion eines dreidimensionalen anatomischen Objektes aus dem Bilddatensatz, **dadurch gekennzeichnet, dass** die Computermittel (17) eine Programmsteuerung aufweisen, welche zur Rekonstruktion des Objektes gemäß dem Verfahren nach einem der Ansprüche 1 bis 8 arbeitet.

10. Bildgebungsgerät nach Anspruch 9, **gekennzeichnet durch** eine EKG-Steuerung (18), **durch** welche die Aufnahme der zweidimensionalen Projektionsbilder in Abhängigkeit vom Herzschlag-Zyklus des Patienten (15) steuerbar ist.

11. Computerprogramm für ein Bildgebungsgerät nach Anspruch 9 oder 10, **dadurch gekennzeichnet, dass** durch das Computerprogramm das Verfahren nach einem der Ansprüche 1 bis 8 auf dem Computermittel des Bildgebungsgerätes implementiert wird.

**Revendications**

1. Procédé pour la reconstruction assistée par ordinateur d'un objet anatomique tridimensionnel (3) à partir de données d'images de diagnostic, comprenant les étapes de procédé suivantes :

   a) acquisition d'un jeu de données d'image de diagnostic de l'objet (3),
   b) fixation d'un point germinatif(5) appartenant à l'objet (3) à l'intérieur du volume de reconstruction (4),
   c) localisation d'un point adjacent, appartenant également à l'objet (3), à l'intérieur du volume de reconstruction (4) conformément à un critère de propagation, qui est calculé au moyen d'une analyse mathématique de zones d'image locales (6,7), assigné au point (5) concerné, du jeu de données d'image,
   d) reconstruction d'une structure tridimensionnelle de l'objet (3) à l'intérieur du volume de reconstruction (4) par répétition multiple de l'étape de procédé c) et propagation le long des points adjacents ainsi localisés,

   **caractérisé en ce que**, dans l'étape de procédé a), une pluralité d'images de projection bidimensionnelles (1,2) est enregistrée de différentes directions de projection, le critère de propagation étant calculé dans l'étape de procédé c) en soumettant dans chaque cas individuellement les zones d'image locales (6,7) des images de projection bidimensionnelles (1,2) à l'analyse mathématique.

2. Procédé selon la revendication 1, **caractérisé en ce que**, dans l'étape de procédé c), un point est identifié comme appartenant à l'objet (3) si l'analyse mathématique produit un résultat qui convient pour une pluralité d'images de projection bidimensionnelles (1,2).

3. Procédé selon l'une des revendications 1 ou 2, **caractérisé en ce que**, dans l'étape de procédé c), les zones d'image locales (6,7) sont déterminées en projetant le point (5) respectif à l'intérieur du volume de reconstruction (4) selon les directions de projection respectives sur les plans d'images des images de projection bidimensionnelles (1,2).

4. Procédé selon l'une des revendications 1 ou 3, **caractérisé en ce qu'**un coefficient de propagation est calculé par l'analyse mathématique dans l'étape de procédé c), en tant que critère de propagation pour chaque image de projection bidimensionnelle (1,2), la valeur dudit coefficient indiquant si le point (5) appartient à l'objet ou non.

5. Procédé selon la revendication 4, **caractérisé en ce que**, durant le calcul du coefficient de propagation, les valeurs propres sont calculées de la matrice de Hesse des valeurs de l'échelle de gris dans la zone d'image locale (6,7) des images de projection bidimensionnelles (1,2) respectives.

6. Procédé selon la revendication 4, **caractérisé en ce que**, durant le calcul du coefficient de propagation pour les images de projection bidimensionnelles (1,2) respectives, une adaptation à un modèle cylindrique à l'intérieur de la zone d'image locale (6,7) est calculé.

7. Procédé selon l'une des revendications 4 à 6, **caractérisé en ce qu'**un point est identifié dans l'étape de procédé c) comme appartenant à l'objet (3) si le coefficient de propagation prend une valeur élevée pour une pluralité d'images de projection bidimensionnelles (1,2).

**8.** Procédé selon l'une des revendications 1 à 7, **caractérisé en ce que** la reconstruction est arrêtée lorsqu'un point de terminaison prédéterminable est atteint durant la propagation dans l'étape de procédé d).

**9.** Appareil d'imagerie, en particulier appareil de radiographie à rayons X sur arceau, ayant des moyens (10, 11, 12, 13, 16) de générer un jeu de données d'image, lequel jeu comprend une pluralité d'images de projection bidimensionnelles d'une partie du corps d'un patient (15) enregistrées de différentes directions de projection, et ayant des moyens informatiques (17) pour reconstruire un objet anatomique tridimensionnel (3) à partir du jeu de données d'image,
**caractérisé en ce que** les moyens informatiques (17) comprennent une commande par programme qui fonctionne conformément au procédé selon l'une des revendications 1 à 8 pour reconstruire l'objet.

**10.** Appareil d'imagerie selon la revendication 9, **caractérisé par** une commande ECG (18), au moyen duquel l'enregistrement des images de projection bidimensionnelles peut être contrôlé conformément au cycle de battement cardiaque du patient (15).

**11.** Programme informatique pour appareil d'imagerie selon la revendication 9 ou la revendication 10, **caractérisé en ce que** le procédé selon l'une des revendications 1 à 8 est implémenté par le programme informatique sur les moyens informatiques de l'appareil d'imagerie.

Fig. 1

Fig. 2